(19) Europäisches Patentamt
European Patent Office
Office européen des brevets

(11) Veröffentlichungsnummer: **0 188 833**
**B1**

(12) **EUROPÄISCHE PATENTSCHRIFT**

(45) Veröffentlichungstag der Patentschrift: **03.10.90**

(21) Anmeldenummer: **85201974.4**

(22) Anmeldetag: **26.11.85**

(51) Int. Cl.$^5$: **C 08 G 85/00**, C 23 F 15/00, C 23 G 5/02

# (54) Verfahren zum Reinigen von Verarbeitungsanlagen für hochviskose reaktive Mehrkomponentenmischungen.

(30) Priorität: **05.12.84 DE 3444293**

(43) Veröffentlichungstag der Anmeldung:
**30.07.86 Patentblatt 86/31**

(45) Bekanntmachung des Hinweises auf die Patenterteilung:
**03.10.90 Patentblatt 90/40**

(84) Benannte Vertragsstaaten:
**AT BE CH DE FR GB IT LI LU NL SE**

(56) Entgegenhaltungen:
**DD-A- 72 964**
**DD-A- 132 675**
**DD-A- 154 446**
**FR-A-2 103 165**
**US-A-2 548 718**
**US-A-4 056 403**
**US-A-4 426 500**

**Die Akte enthält technische Angaben, die nach dem Eingang der Anmeldung eingereicht wurden und die nicht in dieser Patentschrift enthalten sind.**

(73) Patentinhaber: **METALLGESELLSCHAFT AG**
**Reuterweg 14 Postfach 3724**
**D-6000 Frankfurt/M.1 (DE)**

(72) Erfinder: **Unger, Gerfried, Dr.**
**Mittelweg 50**
**D-6000 Frankfurt 1 (DE)**
Erfinder: **Untucht, Helmut**
**Castellring 28**
**D-6369 Nidderau 1 (DE)**
Erfinder: **Winterstein, Wolfgang, Dr.**
**Eichendorffstrasse 35**
**D-6367 Karben 6 (DE)**

(74) Vertreter: **Rieger, Harald, Dr.**
**Reuterweg 14**
**D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zum Reinigen von Verarbeitungsanlagen für hochviskose, reaktive Mehrkomponentenmischungen, insbesondere für hochviskose Zweikomponenten-Dichtstoffe und Zweikomponenten-Vergußmassen.

Es is bekannt, Dichtstoffe und Vergußmassen auf Basis von Polymeren und weiteren Zusatzstoffen herzustellen. Dichtstoffe auf Basis von thermoplastischen Polymeren, wie Polyisobutylen, Butylkautschuk oder thermoplastischen Kautschuken können vergleichsweise problemlos in der Wärme in geeigneten Maschinen aufbereitet und verarbeitet werden. Entstehende Rückstünde können in den Einrichtungen verbleiben und durch Wärmezufuhr fließfähig gemacht und wiederverwendet werden. Auch einkomponentige, reaktive Dichtstoffe, die durch Zutritt von Luftfeuchtigkeit bzw. Sauerstoff vulkanisieren, beispielsweise Dichtstoffe auf Silikonbasis, können ohne größere Schwierigkeiten verarbeitet werden. Derartige Dichtstoffe dienen beispielsweise der Versiegelung von Mehrfachisolierglasscheiben. Für den gleichen Zweck werden auch kalthärtende Zweikomponenten-Kunstkautschuke eingesetzt, beispielsweise solche auf Basis flüssiger Polysulfidpolymere oder auf Basis von Polyurethanen.

Hochviskose 2-Komponenten-Massen, die als Dichtstoffe, Beschichtungs- oder Vergußmassen vorgesehen sind, werden in geeigneten Maschinen unter Anwendung hoher Drücke verarbeitet. Derartige Vorrichtungen fördern die beiden Komponenten aus zwei getrennten Vorratsbehältern oder Gebinden, dosieren die Komponenten im richtigen Mischungsverhältnis, führen die Komponenten in einem Mischkopf zusammen und stellen in statischen und/oder dynamischen Mischeinrichtungen eine homogene Mischung her.

Um eine Verstopfung der Maschine durch aushärtendes Material zu vermeiden, muß bei längeren Arbeitsunterbrechungen und bei Arbeitsende eine Spülung der mit dem Komponentengemisch gefüllten Maschinenteile vorgenommen werden, wie Mischkopf, Mischer, Schläuche, Auftragspistole oder -düse. Dies geschieht in an sich bekannter Weise durch Lösungsmittel oder Lösungsmittelgemische, in denen das pastöse, nicht reagierte Material löslich ist, z.B. Chlorkohlenwasserstoffe, wie Methylenchlorid. Desweiteren sind Spülsysteme bekannt, die unter Verzicht auf das Lösungsmittel eine Komponente der 2-Komponenten-Masse zur Spülung heranziehen und durch starke Verdünnung einer der gemischten Komponenten eine Unterdrückung der Härtereaktion anstreben (EP—A 0059 380, US-PS 3 989 228).

Insbesondere bei sehr reaktiven Massen führt dieser Weg zu erheblichen Schwierigkeiten. Die Schwierigkeiten bestehen in aller Regel darin, daß bei zu langer Verweilzeit des gemischten und reaktiven Materials in der Anlage oder Vorrichtung, das heißt infolge zu geringer Spülwirkung des umgepumpten Lösungsmittels, an den Wandungen von Rohren und Behältern sich härtendes Material zunehmend aufbaut. Schließlich kommt es zu Verstopfungen und zum Stillstand der Anlage.

Eine andere Schwierigkeit bei Spülvorgängen unter Verwendung von Lösungsmitteln besteht darin, daß das reaktive Material bei Überschreiten einer Grenzkonzentration von etwa 10% im Lösungsmittel weiterreagiert und zu gallertartigen Ausscheidungen führt, wodurch das Lösungsmittel nicht mehr pumpbar ist und verworfen werden muß.

Ferner ist aus US-PS 2 548 718 ein Mittel zum Ablösen bzw. Entfernen von gehärteten Filmen, Beschichtungen und Körpern aus elastomeren Polysulfidpolymeren von Substraten bekannt. Das vorbekannte Mittel enthält in Monochlorbenzol als aktivem Lösungsmittel Mercaptoalkohol sowie ein Reaktionsprodukt aus Schwefelkohlenstoff und einem Diamin, insbesondere Dibutylammonium-Dibutyldithiocarbamat.

Der Erfindung liegt die Aufgabe zugrunde, die vorgennanten Nachteile zu vermeiden und ein Reinigungsverfahren bereitzustellen, das ein Unterbrechen oder Beenden von Misch- oder Arbeitsvorgängen mit reaktiven 2-Komponenten-Mischungen in Verarbeitungsanlagen gestattet, ohne daß nachteilige Beeinträchtigungen oder Schäden in den Verarbeitungsanlagen eintreten.

Zur Lösung der Aufgabe geht die Erfindung aus von einem Verfahren zum Reinigen von mit Polymerrückständen aus kautschukartigen Polysulfidelastomeren verunreinigten Vorrichtungen, die zum Mischen und Verarbeiten reaktiver, unter Polymerbildung reagierender, hochviskoser Mehrkomponentenmischungen vorgesehen sind, unter Verwendung von Depolymerisierungsmittel enthaltendem organischem Lösungsmittel. Ein Verfahren der genannten Art wird gemäß der Erfindung in der Weise ausgestaltet, daß die hochpolymeren Rückstände, die aus niedermolekularen flüssigen, endständige SH-Gruppen tragenden Polysulfidpolymeren unter Verwendung von Härtesystemen gebildet sind, mit einem Mittel zur Reaktion gebracht werden, bestehend aus

a) einem Kettenabbruchmittel oder Kettenabbaumittel aus Mercaptogruppen aufweisenden Verbindungen der allgemeinen Formel

$$R—SH \qquad (I)$$

oder Di- oder Polysulfidgruppen aufweisenden Verbindungen der allgemeinen Formel

$$R—S_n—R \qquad (II)$$

in welchen Formeln $n \geq 2$ und R gleiche oder verschiedene Alkyl-, Aryl- oder substituierte Alkyl-, Aryl-Reste sind, und

b) einem Amin als Reaktionsbeschleuniger aus der Gruppe primäre, sekundäre oder tertiäre Alkyl- oder Arylamine in einem organischen Lösungsmittel.

Mit diesem ebenso einfachen wie wirkungsvollen Zusatz des Verfahrens der Erfindung wird ein Eingriff in die Polymerisationsreaktion des zu spülenden Polymersystems vorgenommen und ein rascher Kettenabbruch herbeigeführt. Das Kettenabbruchmittel, bzw. der Inhibitor, muß in solchen Mengen im Lösungsmittel vorhanden sein, daß ein mindestens äquimolarer Umsatz des Inhibitors mit den zur Polymerisationsreaktion befähigten Gruppen des in das Lösungsmittel eingetragenen Polymers möglich ist.

Im Sinne der Erfindung werden unter dem Begriff Lösungsmittel Stoffe aus der Gruppe Methylenchlorid, Ethylacetat, Toluol, Ethylmethylketon, Dioxan und Dimethylsulfoxid verstanden.

Die Inhibitoren können zur schnelleren Reaktion auch im Überschuß eingesetzt werden. Die gemäß dem Verfahren der Erfindung eingesetzten Kettenabbruchmittel bzw. Inhibitoren haben vorzugsweise eine Reaktionsgeschwindigkeit mit dem reaktiven Polymer, die größer ist als die Reaktionsgeschwindigkeit des Polymers mit sich selbst.

Gemäß dem Verfahren der Erfindung werden in einem Lösungsmittel der genannten Art Kettenabbruchmittel bzw. Inhibitoren für Mischungen auf Basis flüssiger Polysulfidpolymere vorgesehen. Das Kettenabbruchmittel ist in dem Lösungsmittel in einer Menge von vorzugsweise 0,5 bis 10 Gew.-% enthalten, wobei die Menge von der Art des jeweiligen Kettenabbruchmittels abhängt. In manchen Fällen kann es auch zweckmäßig sein, das Kettenabbruchmittel in Mengen von mehr als 10 und bis zu 30 Gew.-% einzusetzen.

Die niedermolekularen flüssigen Polysulfidpolymere werden in der praktischen Anwendung als Zweikomponenten-Systeme verwendet, die erste kurze Zeit vor der Verarbeitung vermischt werden. Die eine Komponente enthält das flüssige Polysulfidpolymer mit den Füll- und Zusatzstoffen, während die andere den Härter mit den Oxidationsmitteln, Weichmachern, Beschleunigern usw. enthält. In den flüssigen Polysulfidpolymeren, beispielsweise der Formel

$$HS—(C_2H_4—O—CH_2—O—C_2H_4—S—S)_x—C_2H_4—O—CH_2—O—C_2H_4—SH$$

werden durch Zusatz von Oxidationsmitteln die endständigen SH-Gruppen in Disulfidbrücken umgewandelt, wobei elastische, gummiartige Produkte entstehen.

Zur Unterbrechung der vorgenannten Reaktion enthält das Mittel gemäß dem Verfahren der Erfindung Kettenabbruchmittel und einen Beschleuniger. Als Kettenabbruchmittel werden Mercaptogruppen aufweisende Verbindungen vorgesehen der allgemeinen Formel

$$R—SH \qquad (I)$$

oder Di- oder Polysulfidgruppen aufweisende Verbindungen der allgemeinen Formel

$$R—S_n—R \qquad (II)$$

in welchen Formeln $n \geq 2$ ist und R ein Alkyl-, Aryl- oder ein substituierter Alkyl-, Aryl-Rest, beispielsweise ein Rest aus der Gruppe Alkyl- oder Arylcarbonsäure oder deren Ester; Benzyl oder Xylyl; Hydroxyalkyl oder Hydroxyaryl.

In Formel II kann der Rest gleich oder verschieden sein.

An den anorganischen Rest R ist weiterhin die Bedingung geknüpft, daß er mit sich selbst, mit Mercaptogruppen und mit im Polymersystem vorhandenen Oxidationsmitteln keine Polyadditions- oder -kondensationsreaktionen eingeht.

Geeignete Kettenabbruchmittel bzw. Inhibitoren für das Mittel gemäß dem Verfahren der Erfindung sind beispielsweise monofunktionelle Mercaptane, wie Benzylmercaptan, Xylylmercaptan oder Mercaptoethanol. Ferner eignen sich Ester der Mercaptoessigsäure, wie deren Nonyl-, Lauryl- oder 2-Methoxyethylester. 2-Mercaptoethanol wird bevorzugt verwendet. Eine geeignete, als Kettenabbruchmittel wirkende Disulfidverbindung ist beispielsweise das Dithiodiethylenglykol

$$HO—CH_2—CH_2—S—S—CH_2—CH_2—OH.$$

Die Verbindungen gemäß Formel I und II sind in der Lage, während der Aushärtung einen Kettenabbruch nach folgenden Reaktionsweisen zu bewirken:

$$SH+R—SH+[O]\rightarrow S—S—R+H_2O$$

$$SH+R—S—S—R\rightarrow S—S—R+R—SH$$

Die Verbindungen gemäß Formel I und II sind darüber hinaus in der Lage, völlig ausgehärtete und gealterte Polysulfid-Dichtstoffe nach folgenden Reaktionsweisen zu erweichen und zu lösen, wobei die Polymerketten abgebaut werden:

$$S—S+R—SH \rightarrow S—S—R+HS$$

$$S—S+R—S—S—R \rightarrow S—S—R+R—S—S$$

Aus diesem Grunde ist die unerwünschte Konkurrenzreaktion unter Vernetzungsbedingungen nach

$$2\ R—SH+[O] \rightarrow H_2O+R—S—S—R$$

für die Wirksamkeit der Kettenabbruchmittel unerheblich.

Die Kettenabbruchreaktion wird durch einen weiteren Zusatzstoff beschleunigt, wie primäre, sekundäre oder tertiäre Alkyl- oder Arylamine, beispielsweise Hexamethylendiamin, Diethyl- oder Dibutylamin, Triethylamin, Dimethylanilin.

Die Vorteile der Erfindung sind darin zu sehen, daß mit dem Mittel des erfindungsgemäßen Verfahrens in einfacher, sicherer und wirtschaftlicher Weise Hochdruckmisch- und -Verarbeitungseinrichtungen von noch löslichen Verarbeitungseinrichtungen von noch löslichen Verarbeitungsrückständen gereinigt, die Lösungsmittel aufgearbeutet und die Maschinenaggregate von härtenden Rückständen freigehalten werden können. Auf diese Weise werden unerwünschte Stillstände und Ausfälle vermieden.

Die Erfindung wird anhand der nachstehenden Beispiele näher und beispielhaft erläutert.

Beispiel 1

Es wird ein Reinigungsmittel hergestellt durch Lösen von 1 g 2-Mercaptoethanol und 1,5 g Triethylamin in 100 g Methylenchlorid. In je einer 500-ml-Glasflasche werden 100 g des inhibitorfreien bzw. inhibitorhaltigen Spülmittels mit 40 g angemischtem Polysulfid-Dichtstoff versetzt und die Mischung durch Rühren mit einem Flügelrührer intensiv gerührt. Nach vollständigem Lösen der organischen Bestandteile werden die Mischungen im verschlossenen Zustand stehen gelassen.

Reaktive Polysulfid-Dichtstoffe bilden ohne Inhibitor im Lösungsmittel nach einem Tag eine elastische, nicht mehr bewegliche Gallerte. In dem inhibitorhaltigen Lösungsmittel bildet sich ein Bodensatz aus Füll- und Zusatzstoffen mit einer überstehenden klaren oder leicht getrübten Lösung. Der abgesetzte Schlamm läßt sich ohne Schwierigkeiten aufschütteln oder abfiltrieren.

Vergleichbare Ergebnisse erzielt man mit anderen Inhibitoren, wie z.B. Mercaptoessigsäure-2-ethoxyethylester, mit anderen Lösungsmitteln, wie Ethylacetat, Toluol, Ethylmethylketon, Dioxan, Dimethylsulfoxid und anderen Beschleunigern, wie Dibutylamin, Hexamethylendiamin.

Beispiel 2

In einer 500-ml-Glasflache werden 100 g des in Beispiel 1 beschriebenen Reinigungsmittels mit 40 g ausgehärtetem Polysulfid-Dichtstoff versetzt und die Mischung mit einem Flügelrührer intensiv gerührt. Der ausgehärtete Dichtstoff löst sich zu einer klaren oder leicht getrübten Lösung über einem Bodensatz aus festen, unlöslichen Füll- und Zusatzstoffen auf. Der abgesetzte Schlamm läßt sich aufschütteln oder abfiltrieren.

Vergleichbare Ergenisse erzielt man mit anderen Inhibitoren, Beschleunigern und Lösungsmitteln, wie sie in Beispiel 1 erwähnt sind.

**Patentansprüche**

1. Verfahren zum Reinigen von mit Polymerrückständen aus kautschukartigen Polysulfidelastomeren verunreinigten Vorrichtungen, die zum Mischen und Verarbeiten reaktiver, unter Polymerbildung reagierender, hochviskoser Mehrkomponentenmischungen vorgesehen sind, unter Verwendung von Depolymerisierungsmittel enthaltendem organischem Lösungsmittel, dadurch gekennzeichnet, daß die hochpolymeren Rückstände, die aus niedermolekularen flüssigen, endständige SH-Gruppen tragenden Polysulfidpolymeren unter Verwendung von Härtersystemen gebildet sind, mit einem Mittel zur Reaktion gebracht werden, bestehend aus

a) einem Kettenabbruchmittel oder Kettenabbaumittel aus Mercaptogruppen aufweisenden Verbindungen der allgemeinen Formel

$$R—SH \qquad (I)$$

oder Di- oder Polysulfidgruppen aufweisenden Verbindungen der allgemeinen Formel

$$R—S_n—R \qquad (II)$$

in welchem Formeln n≥2 und R gleiche oder verschiedene Alkyl-, Aryl- oder substituierte Alkyl-, Aryl-Reste sind, und

b) einem Amin als Reaktionsbeschleuniger aus der Gruppe primäre, sekundäre oder tertiäre Alkyl- oder Arylamine in einem organischen Lösungsmittel.

2. Verfahren nach Anspruch 1, dadurch gekennzeichnet, daß als Kettenabbruch- oder Kettenabbaumittel monofunktionelle Mercaptane aus der Gruppe Benzylmercaptan, Xylylmercaptan und Ethylmercaptan; 2-Mercaptoethanol; Ester aus Mercaptoessigsäure und Alkoholen aus der Gruppe Nonylalkohol, Laurylalkohol und 2-Methoxyethylalkohol; sowie Dithiodiethylenglykol verwendet werden.

3. Verfahren nach den Ansprüche 1 und 2, dadurch gekennzeichnet, daß das Kettenabbruch- oder Kettenabbaumittel in einer Menge von 0,5 bis 30 Gew.-% in dem Lösungsmittel enthalten ist.

4. Verfahren nach den Ansprüchen 1 bis 3, dadurch gekennzeichnet, daß als Reaktionsbeschleuniger ein Amin aus der Gruppe Hexamethylendiamin, Diethylamin, Triethylamin und Dibutylamin verwendet wird.

## Revendications

1. Procédé pour nettoyer des appareils souillés par des résidus de polymères en élastomères polysulfurés caoutchouteux, appareils qui sont destinés au malaxage et à la transformation de mélanges multicomposant très visqueux réactifs réagissant par polymérisation, ledit procédé utilisant un solvant organique contenant des dépolymérisants, caractérisé en ce que l'on fait réagir les résidus de hauts polyméres formés, avec des systèmes durcisseurs, à partir de polymères polysurfurés liquides de faibles masses moléculaires et porteurs de groupes SH terminaux, avec un mélange constitué de

a) un agent de rupture de chaîne ou un agent de dégradation de chaîne comprenant des composés à groupes mercapto de formule générale

$$R—SH \qquad (I)$$

ou des composés à groupes di- ou polysulfure de formule générale

$$R—S_n—R \qquad (II)$$

dans lesquelles n≥2 et R représente des restes, identiques ou différents, alkyle ou aryle, substitué ou non, et

b) comme accélérateur de la réaction, une amine du groupe des alkylamines ou arylamines primaires, secondaires ou tertiaires, dans un solvant organique.

2. Procédé selon la revendication 1, caractérisé en ce que l'on utilise, comme agents de rupture de chaîne ou agents de dégradation de chaîne, des mercaptans monofonctionnels du groupe constitué par: benzylmercaptan, xylylmercaptan et éthylmercaptan; le 2-mercaptoéthanol; des esters d'acide mercaptoacétique et d'alcools du groupe suivant: nonanol, alcool laurylique et 2-mercaptoéthanol; ainsi que le dithiodiéthylèneglycol.

3. Procédé selon la revendication 1 ou 2, caractérisé en ce que l'on utilise l'agent de rupture de chaîne ou de dégradation de chaîne à raison de 0,5 à 30% en poids dans le solvant.

4. Procédé selon l'une des revendications 1 à 3, caractérisé en ce que l'on utilise, comme accélérateur de réaction, une amine du groupe suivant: hexaméthylènediamine, diéthylamine, triéthylamine et dibutylamine.

## Claims

1. Process for cleaning apparatus for mixing and processing reactive, highly viscous multi-component mixtures which react to form polymers, which apparatus are contaminated with polymer residues from rubber-type polysulphide elastomers, using an organic solvent containing depolymerisation agent, characterised in that the high-polymer residues, which are formed from low-molecular liquid polysulphide polymers carrying SH groups in end positions using hardener systems, are caused to react with an agent consisting of

a) a chain-breaking agent or chain decomposition agent of compounds having mercapto groups, of the general formula

$$R—SH \qquad (I)$$

or compounds having disulphide or polysulphide groups, of the general formula

$$R—S_n—R \qquad (II)$$

in which formulae n≥2 and R are identical or different alkyl, aryl or substituted alkyl or aryl radicals, and

b) an amine as a reaction accelerator from the group of primary, secondary or tertiary alkylamines or arylamines

in an organic solvent.

2. Process according to Claim 1, characterised in that monofunctional mercaptans from the group benzylmercaptan, xylylmercaptan and ethylmercaptan; 2-mercaptoethanol; esters of mercaptoacetic acid and alcohols of the group nonyl alcohol, lauryl alcohol and 2-methoxyethyl alcohol; and also dithiodiethylene glycol are used as chain breaking agents or chain decomposition agents.

3. Process according to Claims 1 and 2, characterised in that the chain breaking agent or chain decomposition agent is contained in the solvent in a quantity of 0.5 to 30% by weight.

4. Process according to Claims 1 to 3, characterised in that an amine from the group hexamethylenediamine, diethylamine, triethylamine and dibutylamine is used as a reaction accelerator.